Europäisches Patentamt

European Patent Office

Office européen des brevets

(19)

(11) Veröffentlichungsnummer: **0 185 267**
**B1**

(12) **EUROPÄISCHE PATENTSCHRIFT**

(45) Veröffentlichungstag der Patentschrift: 24.10.90

(21) Anmeldenummer: 85115499.7

(22) Anmeldetag: 06.12.85

(51) Int. Cl.⁵: **C 08 L 27/06, C 08 K 5/00 //
(C08L27/06, 33:12),(C08K5/00,
5:01, 5:12)**

(54) Spritzbare Plastisolzusammensetzung und deren Verwendung zur Schalldämpfung.

(30) Priorität: 08.12.84 DE 3444863

(43) Veröffentlichungstag der Anmeldung:
25.06.86 Patentblatt 86/26

(45) Bekanntmachung des Hinweises auf die
Patenterteilung:
24.10.90 Patentblatt 90/43

(84) Benannte Vertragsstaaten:
BE DE FR GB IT NL SE

(56) Entgegenhaltungen:
DE-B-1 138 923
GB-A- 689 720

(73) Patentinhaber: Teroson GmbH
Hans-Bunte-Strasse 4
D-6900 Heidelberg 1 (DE)

(72) Erfinder: Kösters, Bernhard, Dr. Dipl.-Chem.
Boschstrasse 17
D-6904 Eppelheim (DE)

(74) Vertreter: UEXKÜLL & STOLBERG
Patentanwälte
Beselerstrasse 4
D-2000 Hamburg 52 (DE)

Die Akte enthält technische Angaben, die nach
dem Eingang der Anmeldung eingereicht
wurden und die nicht in dieser Patentschrift
enthalten sind.

**Beschreibung**

Bekanntlich liegt das Maximum der akustischen Dämpfung von organischen Polymeren etwas oberhalb ihrer Glasübergangstemperatur $T_g$, wobei das Maximum ferner von der jeweiligen Frequenz abhängig ist. Diesen Schalldämpfungseffekt versucht man in der Praxis für die Lärmbekämpfung möglichst optimal auszunutzen. Der jeweilige akustische Verlustfaktor d einer Masse ergibt sich aus deren innerem Verlustfaktor $d_2$ und deren Elastizitätsmodul $E_2'$, einem Ausdruck für die Biegesteifigkeit der Masse. Das Dämpfungsmaximum soll im menschlichen Hörbereich zwischen 20 und 20.000 Hz bei der üblichen Gebrauchs- oder Umwelttemperatur von etwa 20 bis 30°C liegen.

Die Glasübergangstemperatur vieler Polymerer, z.B. von Methylmethacrylat/Butylmethacrylat- oder Vinylchlorid/Vinylacetat-Copolymeren liegt in diesem Bereich, da die Comonomeren zu einer inneren Weichmachung der Polymeren führen. Diese weichen aber nicht flüssigen Polymeren sind jedoch nicht spritzbar, solange man sie nicht in eine flüssige Phase bringt. Dies geschieht üblicherweise durch Dispergieren in Wasser oder durch Lösen in einer genügenden Menge (>30%) eines geeigneten Lösungsmittels. Das Wasser oder das Lösungsmittel müssen jedoch nach dem Auftragen der Masse unter beträchtlichem Zeit- und Energieaufwand wieder entfernt werden. Wässrige Systeme verursachen Korrosionsprobleme, Systeme auf Basis organischer Lösungsmittel führen zu erhöhten Kosten und beträchtlichen Umweltproblemen, außerdem lassen beide nur relativ geringe Schichtdicken zu.

Eine andere Möglichkeit besteht darin, ein Polymerpulver in einem organischen Weichmacher zu dispergieren, welcher das Pulver bei Raumtemperatur nicht löst, aber bei Erwärmen zum Gelieren führt. Solche Systeme sind als Plastisole bekannt, sie lassen sich insbesondere aus Polyvinylchlorid oder aus Acrylpolymeren (vergl.—DE—A—24 54 235 und DE—A—25 29 732) herstellen. Bei einem spritzbaren Plastisol muß die Viskosität unter 50 dPa · s liegen. Bei Verarbeitung in einer modernen, luftfrei arbeitenden Spritzvorrichtung muß die Viskosität sogar ≤30 dPa · s sein, jeweils gemessen mit dem Rotationsviskosimeter (Rheomat 15).

In der Akustik bzw. Lärmbekämpfung geht es allerdings vornehmlich um den menschlichen Hörbereich, also die Frequenzen zwischen 20 und 20.000 Hz, wobei als Standardmeßfrequenz in der Regel 200 Hz gewählt wird. Die Methode zur Bestimmung der Dämpfung bei diesen Frequenzen ist in der DIN 53440 angegeben, nach der auch das Dämpfungsmaximum in Abhängigkeit von der Temperatur bestimmt werden kann.

Aus der Literatur (F. Linhardt, Kunststoffe *53*, 18—21 (1963)) ist bekannt, daß für das System Polyvinylchlorid/Dioctylphthalat bei dem Verhältnis 67:33 das Dämpfungsmaximum für 1 Hz bei 20°C liegt und beim Verhältnis 60:40 auf 0°C fällt. Die Viskosität dieses letzteren Plastisols liegt aber immer noch bei 100 dPa · s (vergl. Firmenschrift "Weichmacher in der Kunststoffindustrie" der Chemische Werke Hüls AG, November 1976, Seite 9). Dabei ist zu beachten, daß die Viskosität von Plastisolen zu einem großen Teil auch von der jeweiligen Schergeschwindigkeit abhängig ist. Da das Spritzen immer bei hoher Schergeschwindigkeit erfolgt (dies gilt erst recht für das luftfreie Spritzen), ist hier immer die Viskosität bei mehr als 350 UpM gemeint. Darüber hinaus ist die Viskosität stark von der jeweiligen Polyvinylchlorid- und Weichmachertype abhängig. Weichmacher, die niedrigere Viskositäten als Dioctylphthalat ergeben, wirken auch stärker weichmachend (z.B. Dibutylphthalat oder Dioctyladipat), so daß hier das Dämpfungsmaximum bei noch niedrigeren Temperaturen liegt als bei Verwendung von Dioctylphthalat bei jeweils gleichem Mischungsverhältnis.

Die DE—A—1 138 923 betrifft die Verwendung von Dibenzylbenzolen als Weichmacher für PVC, wobei diese ggf. im Gemisch mit herkömmlichen Weichmachern Verwendung finden können. Bei diesen Mischungen stellt das Dibenzylbenzol stets den mengenmäßig untergeordneten Anteil der Weichmachermischung dar. Die GB—A—689 720 beschreibt die an sich bekannte Verwendung von sogenannten Extendern in PVC-Plastisolen. Man erhält auf diese Weise selbst bei sehr hohen Extender-Gehalten nur streichfähige Zusammensetzungen mit einer Viskosität von über 200 dPa · s, mit welchen ein spritzbares Plastisol mit hervorragenden akustischen Eigenschaften nicht erhalten werden kann.

Viskositätserniedriger wie Emulgatoren haxbn bei Polyvinylchloridtypen niedriger Viskosität einen geringen Einfluß, können aber dazu beitragen, das Dämpfungsmaximum weiter herabzusetzen. Hinzu kommt, daß ein den Anforderungen der Praxis genügendes Polyvinylchloridplastisol weitere Komponenten we Thixotropiermittel, Pigmente, Wärmestabilisatoren, evtl. Haftvermittler und auf jeden Fall Füllstoffe enthalten muß, welche die akustische Dämpfung durch Verbesserung der Biegesteifigkeit erhöhen, gleichzeitig aber auch zu einer Viskositätserhöhung führen. Auf diesem Wege ist somit kein Polyvinylchloridplastisol herstellbar, welches gleichzeitig die erforderliche niedrige Viskosität und eine Glasübergangstemperatur im Bereich von etwa 20 bis 30°C aufweist.

Anders verhält es sich bei den oben erwähnten Acrylplastisolen. Bei Polymethylmethacrylat und seinen relativ harten Copolymeren, deren $T_g$ etwa 30° höher als beim Polyvinylchlorid liegt, kann entsprechend mehr Weichmacher Verwendung finden, um $T_g$ auf die Gebrauchstemperatur zu senken, so daß die optimale Dämpfung bei einem Verhältnis von Polymer:Weichmacher von 1:1 erreicht wird. Hieraus läßt sich demgemäß eine akustisch gute Dämpfungsmasse mit guter Spritzbarkeit herstellen. Bei einem etwa konstanten Verhältnis von 1:1 zur Erzielung des Dämpfungsmaximums bei Umgebungstemperatur kann man bei einem Weichmacheranteil von 35 Gew.% und einem Polymergehalt von ebenfalls 35 Gew.% unter Zusatz von 30 Gew.% Hilfsstoffen ein noch gut spritzbares Plastisol herstellen.

Polymethylmethacrylat und seine Copolymeren sind jedoch etwa 3 bis 4 mal teurer als Polyvinylchlorid. Die aus diesen Plastisolen erhaltenen Plastigele haben darüber hinaus deutlich niedrigere Reiß- und Abriebfestigkeit und es kommen nur verhältnismäßig wenige Weichmacher in Betracht.

Der Erfindung liegt die Aufgabe zugrunde, ein Polyvinylchloridplastisol, dessen Dämpfungsmaximum in gelierten Zustand bei etwa 20 bis 30°C liegt, unter Zusatz von höchstens 10 Gew.% an Verdünnung auf eine Viskosität von weniger als 50 dPa · s und damit in eine spritzbare Form zu bringen. Ein solches Plastisol bzw. Organosol könnte beispielsweise zur Schalldämpfung von Maschinengehäusen oder von Autokarosserien eingesetzt werden und würde dabei ganz erhebliche anwendungstechnische Vorteile bieten. Beispielsweise könnte man mit einem derartigen Plastisol die Hohlräume von Kraftfahrzeugtüren ausspritzen und damit auf einfachste Weise eine wirksame Schalldämpfung erzielen. Ferner wäre es möglich, den Unterbodenschutz von Kraftfahrzeugen schalldämpfend auszubilden. Die z.Zt. in der Praxis verwendeten Unterbodenschutzmittel sind akustisch kaum wirksam, da wegen des hohen Weichmachergehaltes ihr Dämpfungsmaximum bei viel zu tiefen Temperaturen leigt.

Es wurde überraschend gefunden, daß sich die vorstehende Aufgabe dadurch lösen läßt, daß man einen ausgewählten Weichmacher in ganz bestimmten Mengenverhältnissen bzw. zwei unterschiedliche Weichmacher verwendet und erforderlichenfalls ein zusätzliches Polymer einsetzt, um ein Ausschwitzen des zweiten Weichmachers zu verhindern. Gegenstand der Erfindung ist demgemäß eine spritzbare Plastisolzusammensetzung mit einer Viskosität von weniger als 50 dPa · s bei 350 UpM, gemessen mit dem Rotationsviskosimeter (Rheomat® 15), auf Basis von Pulvern organischer Polymerer und von Weichmachern sowie 2 bis 40 Gew.% (bezogen auf die Zusammensetzung) an inerten Füllstoffen, die zusätzlich ggf. übliche Hilfsstoffe und ggf. bis zu 10 Gew.% inerte Verdünnungsmittel enthalten kann, welche dadurch gekennzeichnet ist, daß sie als Polymere und Weichmacher eine Mischung aus

a) 32 bis 72 Gew.% an Vinylchloridhomopolymeren und/oder Vinylchlorid/Vinylacetatcopolymeren mit einem Vinylacetatgehalt bis zu 20 Gew.%,

b) 28 bis 60 Gew.% eines Weichmachers bzw. einer Weichmachermischung aus

b1) 0 bis 30 Gew.% (bezogen auf das Vinylchloridhomo- und/oder -copolymer) an üblichen Weichmachern für Vinylchloridpolymere, die mit dem Polymer c) (falls es vorhanden ist) nicht verträglich sind, und

b2) mit dem Polymer c) verträglichen organischen Weichmachern, die mit dem Polymer a) unverträglich sind, sowie

c) für den Fall, daß in dem System (a+b1+b2) die Menge an b2)$\geq$57$-$a/2 Gew.% ist, mindestens 15 Gew.% (bezogen auf den Weichmacher b2) eines jeweils eine Glastemperatur $T_g \geq 65°C$ aufweisenden Methylmethacrylathomopolymeren oder -copolymeren mit copolymerisierbaren Monomeren, wobei die Summe der Komponenten a), b) und c) 100% ergibt, enthält.

Voraussetzung für den Erfolg der Erfindung ist, daß der Weichmacher b1 nur mit dem Polymer a und der Weichmacher b2 nur mit dem Polymer c geliert (d.h. verträglich ist), so daß die Glasübergangstemperatur $T_g$ des Plastigels im wesentlichen durch die Kombination Polymer a/ Weichmacher b1 bestimmt wird, während der Weichmacher b2 für die erforderliche niedrige Viskosität des Systems vor dem Gelieren sorgt. Überraschend wurde dabei ferner gefunden, daß es einen ganz engen Bereich gibt, in welchem aus dem Polymer a und den Weichmachern b1 und b2 ein Plastisol mit der erforderlichen niedrigen Viskosität erhalten wird, welches nach dem Gelieren ein Plastigel mit einer Glasübergangstemperatur>als 20°C bildet, aus dem der Weichmacher b2 noch nicht ausschwitzt. Dieser Bereich ist dadurch definiert, daß bei der oben angegebenen prozentualen Zusammensetzung b2$\geq$57$-$a/2 ist. Sobald b2 diesen Wert überschreitet, wird erfindungsgemäß ein Methylmethacrylathomopolymer oder -copolymer zugesetzt, welches mit dem Weichmacher b2 verträglich ist und diesen beim Gelieren aufnimmt und dadurch dessen Ausschwitzen verhindert.

Als Polymer a findet ein Polyvinylchloridpulver oder ein Vinylchlorid/Vinylacetatcopolymerpulver Verwendung, wobei letzteres einen Vinylacetatgehalt bis zu 20 Gew.% aufweist. Geeignete Polymerpulver können mittels Emulsions-, Suspensions- oder aus Fällungspolymerisation hergestellt werden. Die Entfernung des Wassers aus der Dispersion kann durch Sprühen, Walzen, Evakuieren oder Verdampfen erfolgen.

Von Vorteil ist es, anstelle eines Copolymeren eine Mischung von zwei oder mehr Typen zu verwenden, welche mit dem jeweiligen Weichmacher verschiedene $T_g$-Werte liefern, so daß man nicht ein Dämpfungsmaximum bei einer ganz bestimmten Temperatur, sondern mehrere nebeneinander liegende Maxima erhält, so daß sich ein Maxima-Band ergibt.

Als Weichmacher b1 können alle üblichen an sich bekannten PVC-Weichmacher eingesetzt werden. Wenn das Polymer c anwesend ist, eignen sich nur solche Weichmacher, welche mit dem Polymer c nicht verträglich sind und dieses demgemäß nicht gelieren. Zu nennen sind hierfür in erster Linie die $C_7$- bis $C_{10}$-Alkylphthalate, insbesondere Dioctylphthalat und Dinonylphthalat. Geeignet sind ferner Adipate, Sebazate und Phosphate wie Dioctyladipat, Dioctylsebazat und Dibenzylsebazat.

Der Weichmacher b2 muß sehr sorgfältig ausgewählt werden, da es nur wenige Weichmacher gibt, die nicht zur Gelierung von Polyvinylchlorid oder dessen Copolymeren beitragen. Als besonders geeignet hat sich Dibenzyltoluol erwiesen.

In Betracht kommen ferner Dodecylbenzylbenzol, Terphenyl, bestimmte aromatische Öle und Diphenylether.

Als Polymer c finden Polymethylmethacrylat oder dessen Copolymere mit einer $T_g \geqq 65°C$ Verwendung. Besonders bevorzugt ist ein Copolymer aus Methylmethacrylat und bis zu 20 Gew.% Butylmethacrylat. Geeignet sind ferner sogenannte Kern/Schale-Typen, d.h. Acrylpolymerpulver, deren Kern und deren Schale aus unterschiedlichen Acrylpolymeren besteht. Geeignete Beispiele finden sich in der DE—AS—27 22 752.

Neben den vorstehend genannten Hauptkomponenten kommen noch die verschiedensten Zusätze in Betracht, so daß in insoweit die gesamte Plastisoltechnologie für die erfindungsgemäßen Systeme übernommen werden kann. Die erfindungsgemäßen Plastisole können auch Organosole mit einem Gehalt an organischen Verdünnungsmitteln bis zu 10 Gew.% sein. Geeignete Lösungsmittel sind insbesondere höhersiedende Isoparaffine (z.B. ISOPAR®), die Zusammensetzungen mit guter Stabilität liefern.

Da die akustische Wirksamkeit einer Beschichtung u.a. von der Schichtdicke abhängig ist, kann es häufig vorteilhaft sein, der Plastisolzusammensetzung ein Blähmittel wie Azodicarbonamid zuzusetzen. Denselben Effekt kann man auch mit Hilfe von Füllstoffen in Form von Hohlkugeln erreichen. Solche Zusammensetzungen mit besonders niedriger Dichte eignen sich insbesondere zur Anwendung an Stellen, wo andere mechanische Eigenschaften wie z.B. hohe Abriebfestigkeit keine Rolle spielen, also insbesondere für doppelwandige Gehäuse von Maschinen, z.B. Geschirrspülmaschinen, oder auch für die Türen von Kraftfahrzeugen.

Bei vielen Anwendungen ist der Zusatz von Haftvermittlern erforderlich. Dazu zählen insbesondere die verschiedenen Polyaminoamide, die gleichzeitig auch zur Herabsetzung der Viskosität beitragen, sowie Peroxide zusammen mit Mono-, Di- und Trimethacrylaten, Epoxidharze mit ihren Heißhärtern (z.B. Dicyandiamid), Phenolharze, blockierte und unblockierte Diisocyanate, die als Vernetzer auch dafür sorgen können, daß die Dämpfungskurve der Plastigele nach höheren Temperaturen nicht so stark abfällt. Auch eine Vernetzung des Polyvinylchlorids mit dem Polymethylmethacrylat ist denkbar, wenn das Polymethylmethacrylat mit Chlor reagierende Gruppen, z.B. Epoxy- oder Amingruppen enthält. Für die Plastisole können Emulgatoren nützlich sein, welche die Pastenviskosität regeln bzw. herabsetzen, z.B. Polyethylenoxidderivate; allerdings dürfen sie die $T_g$ nicht herabsetzen. Für den Einsatz bei höheren Temperaturen sind Wärmestabilisatoren erforderlich. Bekannt sind hierfür Epoxidweichmacher und Schwermetallverbindungen, insbesondere solche des Bleis, Cadmiums, Zinns und Zinks.

Schließlich seien als wesentliche Zusätze Füllstoffe genannt, welche ggf. auch beschichtet sein können. Üblicherweise finden Kreide, Schwerspat, Dolomit, Silikate, Vermikulit, Talk, Glimmer Kohle, Koks, Graphit oder Metalloxide, z.B. Aluminiumoxid. Calciumoxid, Zinkoxid, Titandioxid oder Siliciumdioxid Verwendung. Organische oder anorganische Hohlkugeln wurden oben bereits als ebenfalls in Betracht kommende Füllstoffe erwähnt.

Die Gelierung der erfindungsgemäßen Plastisolzusammensetzungen erfolgt bei Temperaturen zwischen 80 und 230°C nach dem Aufspritzen der Zusammensetzung auf das zu behandelnde Substrat, in der Regel eine Blechfläche.

Infrage kommende Einsatzgebiete sind Haushalts- und Bürogeräte wie Wasch- und Spülmaschinen, Spültische und -becken, Schreib- und Rechenmaschinen soie Kraftfahrzeuge, insbesondere deren Dächer (Innenseite), Unterboden, Türen, Kofferraum- und Motorraumhauben, Seitenwände etc.

Zur näheren Erläuterung der Erfindung sollen die nachfolgenden Beispiele dienen. Alle Plastisole wurden, wenn nicht anders angegeben, 20 Min. lang bei 140°C geliert. Die Dämpfungswerte wurden nach DIN 53445 oder DIN 53440 bestimmt. Dabei wurden die Plastisole mit Hilfe eines dünn aufgetragenen Haftprimers auf den Meßstreifen aufgebracht.

Die Mengenangaben in der folgenden Tabelle sind in Gewichtsteilen. Wo erforderlich sind für die Bestandteile a, b1 und b2 je Anteile in % (jeweils bezogen auf die Kombination von a mit b1 und b2) in Klammern angegeben.

Die Versuche I bis VI stellen Vergleichsversuche dar, während die Beispiele 1 bis 5 die Erfindung erläutern.

EP 0 185 267 B1

TABELLE

| Beispiel | I | II | III | IV | V | VI | 1 | 2 | 3 | 4 | 5 |
|---|---|---|---|---|---|---|---|---|---|---|---|
| PVC (a) | 60 | 60 | 60 | 50 | | | | | | | |
| PVC/VA (a) | — | — | — | — | 60 | 60 | 50 (58.8) | 50 (56.8) | 45 (54.9) | 60 | 70 |
| DOP (b1) | 40 | 20 | 10 | 20 | 40 | 20 | 8 (9.4) | 8 (9.1) | 10 (12.2) | — | — |
| DINP (b1) | — | — | — | — | — | — | — | — | — | 15 | 10 |
| DBT (b2) | — | 20 | 30 | 20 | — | 20 | 27 (31.8) | 30 (34.1) | 27 (32.9) | 25 | 20 |
| PMMA (c) | — | — | — | — | — | — | 15 | 10 | 15 | | |
| $CaCO_3$ | — | — | — | 10 | — | — | — | 5 | 5 | 13 | 40 |
| HK | — | — | — | — | — | — | 10 | — | 10 | | |
| PAA | — | — | — | — | — | — | — | 0,5 | — | — | 1,5 |
| $(CH_2)_x$ | | | | | | | | | | | 7 |
| | 100 | 100 | 100 | 100 | 100 | 100 | 110 | 100 | 112 | 113 | 141.5 |
| Visk. (dPa · s) | 64 | 48 | 18 | 43 | 19 | 19 | 24 | 16 | 30 | 30 | 30 |
| WM-Vertr. | + | (+) | — | (+) | + | + | + | + | + | + | + |
| T max. (°C) | 0° | 6° | ./. | −3° | −3° | 7° | 26° | 26 | RT | RT | RT |
| KZ (d=0,1) | (84) | (70) | ./. | (90) | (76) | (80) | 36 | 41 | 37 | 43 | 49 |
| $E_2'$ bei 20°C ($10^8$ Pa) | (0,56) | (0,54) | ./. | (0,40) | 0,27 | ./. | 8,27 | 5,97 | 4,61 | 2,37 | 13,1 |

Tabellefussnoten:

| | |
|---|---|
| PVC | Pastentype, K-Wert 70, niederviskos |
| PVC/VA | PVC-Suspensions-Copolymerisat mit 12% Vinylacetat, K-Wert 60, durchschn. Korngröße 65 μm |
| DOP | Di-2-ethylhexylphthalat |
| DINP | Diisononylphthalat |
| DBT | Dibenzyltoluol |
| PMMA | MMA-Copolymer mit 12% n-Butylmethacrylat (Pastentype) |
| $CaCO_3$ | fein gemahlene Kreide, durchschn. Korngröße unter 40 μm |
| HK | anorganische Hohlkugeln, durchschn. Korngröße 100 μm |
| PAA | Polyaminoamid, Aminzahl ca. 400 |
| $(CH_2)_x$ | Isoparaffin (Sdp. 176—188°C) |
| Viskosität | gemessen im Epprecht Rheomat 15 Weichmacherverträglichkeit; der WM |
| WM-Vertr. | darf nach Gelierung und Lagerung von 4 Wochen sich nicht auf der Oberfläche einer Probe abscheiden |
| T max | Temperatur beim maximalen log. Dekrement, bestimmt nach DIN 53445 |
| KZ(d=0,1) | Kennzahl in Gew.% (bezogen) auf Blechgewicht), bei der der Verlustfaktor 0,1 beträgt (20°C; 200 Hz) |
| $E_2'$ | Elastizitätsmodul oder Speichermodul der Belagschicht (Werte in ( ) sind extrapoliert) |

Wie die vorstehenden Ergebnisse zeigen, weisen Plastisole außerhalb des beanspruchten Bereiches für eine Spritzverarbeitung zum Teil eine zu hohe Viskosität auf. Darüber hinaus liefern sie Plastigele mit ungenügender Weichmacherverträglichkeit und/oder ein Dämpfungsmaximum bei einer zu niedrigen Temperatur, so daß die akustische Dämpfung und damit der Kennzahl bei Normaltemperatur von 20 bis 30°C unbefriedigend ist. Angestrebt werden eine Kennzahl <55 und ein E-Modul >2 · 10$^8$ Pa.

Die Ergebnisse zeigen ferner, daß in einem engen Bereich als Plastisolzusammensetzungen geeignete Plastisole auf Basis von PVC bzw. PVC/VA auch ohne Zusatz von Polymethylmethacrylat erhalten werden können. Dabei ist besonders überraschend, daß trotz des hohen Anteils an Weichmacher b2, welcher Polyvinylchlorid nicht geliert, dennoch eine ausreichende Weichmacherverträglichkeit (kein Ausschwitzen des Weichmachers) erhalten wird. Nach den Angaben in der Literatur (Hüls, a.a.0.) liegt die Verträglichkeitsgrenze bei wesentlich niedrigeren Mengen b2.

**Patentansprüche**

1. Spritzbare Plastisolzusammensetzung mit einer Viskosität von weniger als 50 dPa · s bei 350 UpM, gemessen mit dem Rotationsviskosimeter (Rheomat® 15), auf Basis von Pulvern organischer Polymerer und von Weichmachern sowie 2 bis 40 Gew.% (bezogen auf die Zusammensetzung) an inerten Füllstoffen, die zusätzlich ggf. übliche Hilfsstoffe und ggf. bis zu 10 Gew.% inerte Verdünnungsmittel enthalten kann, dadurch gekennzeichnet, daß sie als Polymere und Weichmacher eine Mischung enthält aus

a) 32 bis 72 Gew.% an Vinylchloridhomopolymeren und/oder Vinylchlorid/Vinylacetatcopolymeren mit einem Vinylacetatgehalt bis zu 20 Gew.%,

b) 28 bis 60 Gew.% eines Weichmachers bzw. einer Weichmachermischung aus

b1) 0 bis 30 Gew.% (bezogen auf das Vinylchloridhomo und/oder -copolymer) an üblichen Weichmachern für Vinylchloridpolymere, die mit dem Polymer c) (falls es vorhanden ist) nicht verträglich sind, und

b2) mit dem Polymer c) verträglichen organischen Weichmachern, die mit dem Polymer a) unverträglich sind, sowie

c) für den Fall, daß in dem System (a+b1+b2) die Menge an b2) ≥57−a/2 Gew.% ist, mindestens 15 Gew.% (bezogen auf den Weichmacher b2) eines jeweils eine Glastemperatur $T_g$≥65°C aufweisenden, Methylmethacrylathomopolymeren oder -copolymeren mit copolymerisierbaren Monomeren, wobei die Summe der Komponenten a), b) und c) 100% ergibt.

2. Plastisolzusammensetzung nach Anspruch 1, dadurch gekennzeichnet, daß das Vinylchlorid/ Vinylacetat-Copolymer einen Vinylacetatgehalt bis zu 20 Gew.% aufweist.

3. Plastisolzusammensetzung nach einem der Ansprüche 1 oder 2, dadurch gekennzeichnet, daß sie als Weichmacher b1) $C_7$ bis $C_{10}$-Alkylphthalate enthält.

4. Plastisolzusammensetzung nach einem der Ansprüche 1 bis 3, dadurch gekennzeichnet, daß sie als Weichmacher b2) Dibenzyltoluol enthält.

5. Plastisolzusammensetzung nach einem der Ansprüche 1 bis 4, dadurch gekennzeichnet, daß sie als Methylmethacrylatcopolymer ein Copolymer aus Methylmethacrylat und bis zu 20 Gew.% Butylmethacrylat enthält.

6. Plastisolzusammensetzung nach einem der Ansprüche 1 bis 5, dadurch gekennzeichnet, daß sie eine oder mehrere chemisch vernetzende Substanzen enthält.

7. Plastisolzusammensetzung nach einem der Ansprüche 1 bis 6, dadurch gekennzeichnet, daß sie ein Blähmittel, vorzugsweise Azodicarbonamid enthält.

8. Verwendung der Zusammensetzung nach den Ansprüchen 1 bis 7 zur Schalldämpfung von schallabstrahlenden Metallflächen durch Aufspritzen der Masse auf die Flächen und anschließendes Wärmehärten.

**Revendications**

1. Composition de plastisol injectable ayant une viscosité de moins de 50 dPa · s à 350 UpM, mesurée avec le viscosimètre à rotation (Rheomat® 15), à base de poudres de polymères organiques ainsi que de plastifiants et 2 à 40% en poids (en se rapportant sur la composition) de charges inertes qui peuvent, le cas échéant, contenir les matières auxiliaires habituelles et le cas échéant jusqu'à 10% en poids de diluants inertes, caractérisée en ce qu'elle contient, en tant que polymères et plastifiants, un mélange de

a) 32 à 72% en poids d'homopolymères de chlorure de vinyle et/ou de copolymères de chlorure de vinyle/acétate de vinyle avec une teneur en acétate de vinyle pouvant atteindre 20% en poids,

b) 28 à 60% en poids d'un plastifiant ou, respectivement, d'un mélange de plastifiants de

— b1) 0 à 30% en poids (en se rapportant à l'homopolymère et/ou copolymère de chlorure de vinyle) de plastifiants traditionnels pour des polymères de chlorure de vinyle qui ne sont pas compatibles avec le polymère c) (dans le cas où il est présent), et

— b2) des plastifiants organiques compatibles avec le polymère c), qui sont incompatible avec le polymère a) ainsi que

c) dans le cas où, dans le système (a+b1+b2), la quantité de b2) est ≥57−a/2% en poids, au moins 15% en poids (en se rapportant sur le plastifiant b2) d'un homopolymère ou copolymère de méthacrylate de

7

**EP 0 185 267 B1**

méthyle qui présente une température de transition vitreuse $T_g \geq 65°C$ avec des monomères copolymérisables,

la somme des composants a), b) et c) donnant 100%.

2. Composition de plastisol selon la revendication 1, caractérisée en ce que le copolymère de chlorure de vinyle/acétate de vinyle présente une teneur en acétate de vinyle pouvant atteindre 20% en poids.

3. Composition de plastisol selon l'une quelconque des revendications 1 ou 2, caractérisée en ce qu'elle contient, en tant que plastifiant b1), un phtalate d'alkyle $C_7$ à $C_{10}$.

4. Composition de plastisol selon l'une quelconque des revendications 1 à 3, caractérisée en ce qu'elle contient, en tant que plastifiant b2), du dibenzyltoluène.

5. Composition de plastisol selon l'une quelconque des revendications 1 à 4, caractérisée en ce qu'elle contient, en tant que copolymère de méthacrylate de méthyle, un copolymère de méthacrylate de méthyle et jusqu'à 20% en poids de méthacrylate de butyle.

6. Composition de plastisol selon l'une quelconque des revendications 1 à 5, caractérisée en ce qu'elle contient une ou plusieurs substances chimiques réticulantes.

7. Composition de plastisol selon l'une quelconque des revendications 1 à 6, caractérisée en ce qu'elle contient un agent gonflant, avantageusement de l'azodicarbonamide.

8. Utilisation de la composition selon l'une quelconque des revendications 1 à 7, pour l'isolement acoustique de surfaces en métal rayonnant du bruit, par application, au pistolet, de la masse sur les surfaces et ensuite thermodurcissement.

## Claims

1. Sprayable plastisol composition having a viscosity of less than 50 dPa · s at 350 rpm, measured by the rotational viscometer (Rheomat® 15), and based on powders of organic polymers and on plasticizers and also 2 to 40% by weight (relative to the composition) of inert fillers, which composition may additionally contain, if desired, customary auxiliaries and, if desired, up to 10% by weight of inert diluents, characterized in that the polymers and plasticizers which it contains are a mixture of

a) 32 to 72% by weight of vinyl chloride homopolymers and/or vinyl chloride/vinyl acetate copolymers having a vinyl acetate content of up to 20% by weight,

b) 28 to 60% by weight of a plasticizer or of a plasticizer mixture composed of

b1) 0 to 30% by weight (relative to the vinyl chloride homo- and/or co-polymer) of customary plasticizers for vinyl chloride polymers which are incompatible with the polymer c) (if it is present), and

b2) polymer c)—compatible organic plasticizers which are incompatible with the polymer a), and also

c) if the system (a+b1+b2) the amount of b2) $\geq 57 - a/2\%$ by weight, at least 15% by weight (relative to the plasticizer b2) of a methyl methacrylate homopolymer, or copolymer with copolymerizable monomers, the homopolymer or copolymer having a glass transition temperature $T_g \geq 65°C$,

the sum of the components a), b) and c) being 100%.

2. Plastisol composition according to Claim 1, characterized in that the vinyl chloride/vinyl acetate copolymer has a vinyl acetate content of up to 20% by weight.

3. Plastisol composition according to either of Claims 1 or 2, characterized in that it contains $C_7$ to $C_{10}$-alkyl phthalates as plasticizer b1).

4. Plastisol composition according to any one of Claims 1 to 3, characterized in that it contains dibenzyltoluene as plasticizer b2).

5. Plastisol composition according to any one of Claims 1 to 4, characterized in that it contains a copolymer of methyl methacrylate and up to 20% by weight of butyl methacrylate as the methyl methacrylate copolymer.

6. Plastisol composition according to any one of Claims 1 to 5, characterized in that it contains one or more chemically crosslinking substances.

7. Plastisol composition according to any one of Claims 1 to 6, characterized in that it contains a blowing agent, preferably azodicarbonamide.

8. The use of the composition according to Claims 1 to 7 for soundproofing of sound-emitting metal surfaces by spraying the material onto the surfaces and then heat-hardening it.